# EUROPEAN PATENT SPECIFICATION

(11) **EP 2 619 924 B1**
(45) Date of publication and mention of the grant of the patent: **28.06.2017**
(21) Application number: 11781457.4
(22) Date of filing: 19.09.2011
(51) Int. Cl.: H04B 7/185

(54) **MULTIPLE ACCESS TRANSMISSION SCHEME FOR A WIRELESS SYSTEM**
VIELFACHZUGRIFFSVEFAHREN ZUM SENDEN IN DRAHTLOSEN SYSTEMEN
TRANSMISSION À ACCÈS MULTIPLE DANS LES SYSTÈMES RADIOTÉLÉGRAPHIQUES

(30) Priority: 21.09.2010 GB 201015801
(43) Date of publication of application: 31.07.2013
(73) Proprietor: Newtec Cy N.V., 9100 Sint-Niklaas (BE)
(72) Inventor: ROLLE, Alain, B-9000 Gent (BE); BREYNAERT, Dirk, B-9100 Sint-Niklaas (BE); DELARUELLE, Daniel, B-9100 Sint-Niklaas (BE)
(74) Representative: Office Kirkpatrick
(86) International application number: PCT/EP2011/066239
(87) International publication number: WO 2012/038380

(56) References cited:
- MARAL G ET AL: "Section 5.10: Overall Link Performance With Regenerative Satellite; Section 5.11: Link Performance With Multibeam Antenna Coverage VS Monobeam Coverage; Section 5.12: Intersatellite Link Performance; Chapter 7: Satellite Networks", 11 November 2009 (2009-11-11), SATELLITE COMMUNICATIONS SYSTEMS, WILEY, OXFORD, PAGE(S) 225 - 237,293, XP002615604, ISBN: 978-0-470-71458-4 7.7.1.4, 7.7.3, 7.7.4, 7.7.8; page 319 - page 350
- JASON NEALE ET AL: "Interactive Channel for Multimedia Satellite Networks", IEEE COMMUNICATIONS MAGAZINE, IEEE SERVICE CENTER, PISCATAWAY, US, vol. 39, no. 3, 1 March 2001 (2001-03-01), pages 192-198, XP011091446, ISSN: 0163-6804
- PRAHMKAEW S: "Adaptive rate control (ARC) over DVB-RCS on satellite links", WIRELESS TELECOMMUNICATIONS SYMPOSIUM, 2009. WTS 2009, IEEE, PISCATAWAY, NJ, USA, 22 April 2009 (2009-04-22), pages 1-7, XP031573208, ISBN: 978-1-4244-2588-4

## Description

### FIELD OF THE INVENTION

This invention relates to a multiple access transmission scheme for a wireless system, such as the return link of an interactive satellite communication system and to apparatus for implementing the scheme.

### BACKGROUND TO THE INVENTION

A range of interactive satellite communication systems have been proposed. In this type of system, terminals receive data from a hub on a forward link and can also transmit data to the hub via a return link (return channel). Both the forward link and return link are transmitted via a satellite. A system of this kind is standardised as Digital Video Broadcasting-Return Channel via Satellite (DVB-RCS) ETSI EN 301 790.

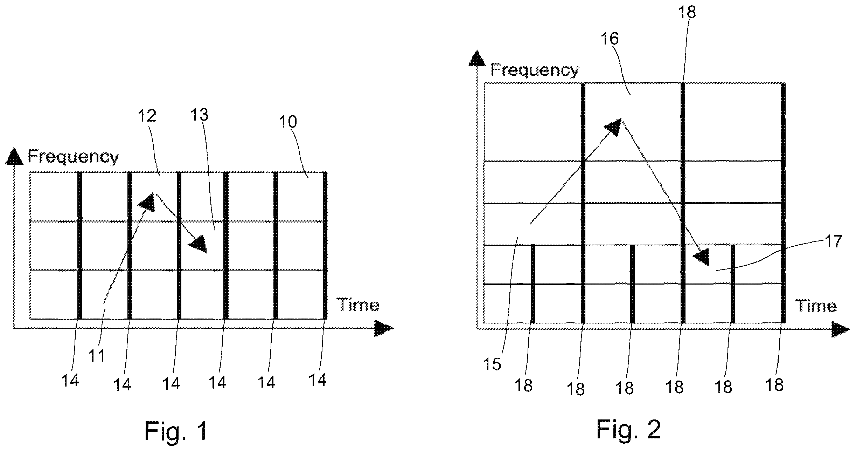

DVB-RCS uses a medium which is multiplexed on a time-shared and frequency-shared basis between terminals. The scheme is called Multiple-Frequency Time-Division Multiple Access (MF-TDMA). MF-TDMA allows a group of terminals to communicate with a gateway using a set of carrier frequencies, each of which is divided into time-slots. A scheduler allocates to each active terminal a series of slots, each slot being defined by a frequency, a bandwidth, a start time and a duration. Figure 1 shows one of the MF-TDMA schemes, called fixed MF-TDMA. A grid of time slots 10 is shown. The slots have the same duration and the same bandwidth. The arrows in Figure 1 indicate a sequence of slots 11, 12, 13 assigned by the scheduler to one terminal in the system.

Another form of MF-TDMA is Dynamic-Slot MF-TDMA. This varies the bandwidth and duration of successive slots allocated to a terminal. In addition to changing carrier frequency and burst duration, the terminal may also change transmission rate and coding rate between successive bursts. The advantage of the more flexible terminal is more efficient adaptation to the widely varying transmission requirements typical of multimedia. Figure 2 shows a sequence of slots 15, 16, 17 assigned by the scheduler to one terminal in the system. It can be seen that slot 16 has a wider bandwidth than slots 15 and 17. Slots 15 and 16 are longer than slot 17.

The types of MF-TDMA described in ETSI EN 301 790 have limitations in terms of bandwidth efficiency.

An introduction to the DVB-RCS satellite system is presented in the document "SATELLITE COMMUNICATIONS SYSTEMS" by MARAL G et al., 11 November 2009. This document defines a return channel satellite terminal RCST, which sends data to a gateway on a satellite return link. This return link access is organized by applying MF-TDMA.

The details of synchronisation in DVB-RCS are defined in the document "INTERACTIVE CHANNEL FOR MULTIMEDIA SATELLITE NETWORKS" by JASON NEALE ET AL, IEEE COMMUNICATIONS MAGAZINE, 1 March 2001.

### SUMMARY OF THE INVENTION

An aspect of the present invention provides a method of operating a terminal in a wireless multiple access communication system comprising a forward link to the terminal and a return link from the terminal, according to claim 1.

The term "continuous", for the return link, comprises: continuous transmission with zero guard time; continuous transmission with a small number of zero-energy, or reduced energy, transmission symbols at the beginning and/or end of a transmission slot. Advantageously, the return link signal is transmitted in a phase continuous manner across the sequence of transmission slots. This means that, even when the transmitted signal contains zero-energy (muted) transmission symbols, the duration of the period containing zero-energy transmission symbols is an integer number of transmission symbol periods.

Transmitting in a continuous manner avoids the need for a receiver to re-acquire the terminal signal each time the signal moves to a new frequency carrier and/or symbol rate, as the receiver can retain "lock" on a signal. This has an advantage of avoiding the need for a significant amount of overhead data, such as a long preamble provided for synchronisation purposes. Conventional transmission schemes transmit bursts with a significant guard time between bursts and require a significant amount of non-payload overhead data, such as a long preamble, in every transmitted burst, which is provided for the sole purpose of enabling receiver synchronisation.

Advantageously, the method comprises receiving, on the forward link, information identifying a subsequent transmission slot. The information allows the terminal to determine a number of transmission symbols to be transmitted during the subsequent transmission slot. The information can specify a symbol rate, from which the terminal can determine a number of transmission symbols, or the information can specify a number of transmission symbols.

Advantageously, the method comprises acquiring synchronisation with a hub of the system by: receiving, from the hub, an instruction to start transmitting identification symbols on the return link; transmitting, on the return link, identification symbols and counting the number of transmitted identification symbols; receiving an instruction to begin transmitting a user data payload in a first transmission slot after a specified number of transmitted identification symbols; and transmitting, in the first transmission slot, a user data payload after transmitting the specified number of identification symbols.

Advantageously, the method comprises receiving an instruction to adjust the symbol rate on the return link. The terminal can receive an instruction to increase, or decrease, the symbol rate. This ensures that the terminal remains in synchronism with the hub, without the need for the terminal to maintain a time reference.

A further aspect of the invention provides a method of operating a hub of a wireless multiple access communication system comprising a forward link from the hub to terminals in the system and a return link from a terminal to the hub, wherein return links from terminals share a transmission medium which is divided on the basis of time and frequency, the method comprising, at the hub:
allocating a terminal in the system a sequence of transmission slots, each transmission slot being defined as a time slot and, carrier frequency, wherein carrier frequency and symbol rate can change between transmission slots;
allocating a return link receive function for the reception of the return link signal from each terminal in the network; and,
causing a receiver of the terminal to adjust the centre frequency and symbol rate at the start of a new transmission slot substantially in synchronism with a change in the centre frequency of the signal received from the terminal by providing information instructing the terminal the symbol rate and centre frequency to be transmitted during a subsequent transmission slot in the return link, the information allowing the terminal to determine the number of non-zero energy and zero-energy transmission symbols to be transmitted during the subsequent transmission slot in the return link, each transmission slot being defined as a time slot and the centre frequency;
wherein the carrier phase of the return link signal is continuous at boundaries of transmission slots; and
wherein the time-duration of the transmission slot of the return link signal is an integer multiple of the symbol period.

Conventional MF-TDMA requires fine scheduling granularity, typically implying usage of short bursts, which implies that short error protection codewords should be used to fit in these short bursts. For a given available signal-to-noise ratio it is more difficult to design spectral efficient codes with short codewords than with long codewords. Advantageously, in embodiments of the present invention there is continuous transmission (i.e. no 'bursts'), so codeword lengths can be determined by a tradeoff between allowable processing delay and desired spectral efficiency versus signal-to-noise ratio, as is known in the art, without or with very little hinder from the MF-TDMA context. Thus, embodiments of the present invention improve overall spectral efficiency due to: more efficient codes (longer codewords) and less overhead since there is no guard time between slots and moreover for a given amount of transported payload data, less preamble is needed for synchronisation purposes. A further advantage of the substantial continuous transmission is that a signal can be monitored easily with respect to the terminal outdoor unit saturation. Saturation monitoring enables saturation prevention, which in turn allows using an outdoor unit power amplifier very close to saturation instead of taking unduly large power backoff, thus allows using an outdoor unit very efficiently. Saturation monitoring is very difficult for the short burst durations typically used in classical MF-TDMA.

Further aspects of the invention provide apparatus for performing any of the described or claimed methods. In particular, an aspect of the invention provides a wireless communication terminal for use in a wireless multiple access communication system comprising:
a receiver arranged to acquire frequency synchronization with a stable common reference in the system (5) and to receive a forward link signal (FW), the forward link signal comprising information instructing the terminal the symbol rate and centre frequency to be transmitted during a subsequent transmission slot in the return link, each transmission slot being defined as a time slot and the centre frequency; and
a transmitter arranged to transmit a return link signal, wherein the return link uses a medium which is shared between terminals on the basis of time and frequency, and wherein the transmitter is arranged to transmit a return link signal from the terminal comprising a sequence of transmission slots, each transmission slot being defined as a time slot and, carrier frequency, wherein carrier frequency and symbol rate can change between transmission slots, and wherein the return link signal is transmitted continuously across the sequence of transmission slot.

Another aspect of the invention provides a wireless communication apparatus for use at a hub of a wireless multiple access communication system comprising:
a transmitter arranged to transmit a forward link to terminals in the system;
a receiver arranged to receive a return link signal from each one of the terminals, wherein return link signals from terminals share a transmission medium which is divided on the basis of time and frequency;
a scheduling function arranged
   - to schedule a sequence of transmission slots for the return link of each terminal,
   - to provide information instructing the terminal the symbol rate and centre frequency to be transmitted during a subsequent transmission slot in the return link, the information allowing the terminal to determine the number of non-zero energy and zero-energy transmission symbols to be transmitted during the subsequent transmission slot in the return link, each transmission slot being defined as a time slot and the carrier frequency, the time-duration of the transmission slot of the return link signal being an integer multiple of the symbol period and the carrier phase of the return link signal being continuous at boundaries of transmission slots, and
   - to cause the receiver to adjust the centre frequency and symbol rate at the start of a new transmission slot substantially in synchronism with a change in the frequency of the return link signal received from the terminal.

The system can have any one of the following topologies: star; multi-star; partly meshed star network where terminal-to-hub and terminal-to-terminal communication links can share bandwidth.

The functionality described here can be implemented in hardware, software executed by a processing apparatus, or by a combination of hardware and software. The processing apparatus can comprise a computer, a processor, a state machine, a logic array or any other suitable processing apparatus. The processing apparatus can be a general-purpose processor which executes software to cause the general-purpose processor to perform the required tasks, or the processing apparatus can be dedicated to perform the required functions. Another aspect of the invention provides machine-readable instructions (software) which, when executed by a processor, perform any of the described methods. The machine-readable instructions may be stored on an electronic memory device, hard disk, optical disk or other machine-readable storage medium. The machine-readable instructions can be downloaded to the storage medium via a network connection.

### BRIEF DESCRIPTION OF THE DRAWINGS

Embodiments of the invention will be described, by way of example only, with reference to the accompanying drawings in which:
Figure 1 shows a conventional MF-TDMA scheme;
Figure 2 shows another conventional MF-TDMA scheme;
Figure 3 shows an interactive satellite communication system according to an embodiment of the present invention;
Figure 4A shows a transmission scheme according to an embodiment of the present invention;
Figure 4B shows a transmission scheme according to another embodiment of the present invention, with fixed slot duration;
Figure 4C shows a transmission scheme according to another embodiment of the present invention, with fixed slot duration and frequency grid;
Figure 5A shows operation of a terminal according to a conventional MF-TDMA transmission scheme;
Figure 5B shows operation of a terminal using a transmission scheme according to an embodiment of the present invention;
Figure 6 shows a state diagram of a terminal in the system of Figure 3;
Figure 7 shows operation of the hub and a terminal in the system of Figure 3;
Figure 8 shows an example structure of a physical layer frame;
Figure 9 shows a baseband signal generated by a terminal;
Figure 10 shows apparatus at a terminal of the system of Figure 3;
Figure 11 shows apparatus at a hub of the system of Figure 3.

### DESCRIPTION OF PREFERRED EMBODIMENTS

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

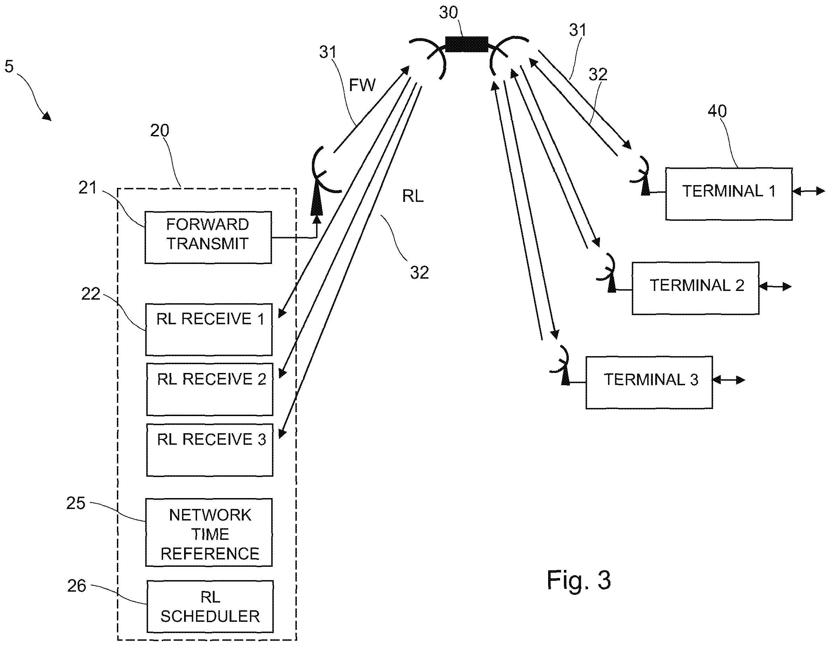

Figure 3 shows an interactive satellite communication system 5 according to an embodiment of the present invention. The main entities of the communication system 5 are a hub 20, a satellite 30 and terminals 40. The hub 20 comprises a forward link transmit function 21 and a set of receivers 22 for receiving signals from terminals 40 on return links 32. In use, the forward link transmit function 21 transmits a forward link (FW) signal 31 to satellite 30, and the satellite 30 retransmits the forward link signal 31 to terminals 40. Each active terminal 40 transmits a return link (RL) signal 32 to satellite 30, and the satellite 30 retransmits the return link signal 32 to receivers 22 at the hub. Advantageously, there is a receiver allocated to receive the return link signal 32 from each active terminal 40. The hub also comprises a network time reference 25. A return link scheduler 26 allocates transmission slots to terminals 40 based on traffic requests received from terminals 40 and based on perceived return link quality (e.g. signal to noise ratio) on every terminal to hub link.. Scheduler 26 transmits information to terminals, via the forward link 31, identifying which transmission slots a terminal 40 should use to transmit their data. The system 5 is effectively a star network, servicing N users (N=3 in Figure 3) through the hub 20. A terminal 40 can be an indoor unit or an outdoor unit. The forward link (FW) 31 from the hub 20 to terminals 40 is typically a single broadband carrier carrying information to all users by means of a time-sharing mechanism such as Time-Division Multiple Access (TDMA).

In embodiments of the present invention, the access medium is shared between all return links 32 by means of Multiple-Frequency Time-Division Multiple Access (MF-TDMA). At every single time instant the transmitted signals of all terminals (users) 40 are separated in frequency and the frequency and width of spectrum occupied by each terminal is subject to change over time. Accordingly, it can be seen that the transmission scheme is a combination of Frequency Division Multiple Access (FDMA) and Time Division Multiple Access (TDMA). However, in contrast to conventional MF-TDMA systems, a terminal 40 transmits continuously, and does not use a conventional guard time interval in between transmissions at different frequencies and symbol rates. The conventional guard time interval is shown in the prior art schemes of Figures 1 and 2 as bold lines 14, 18.

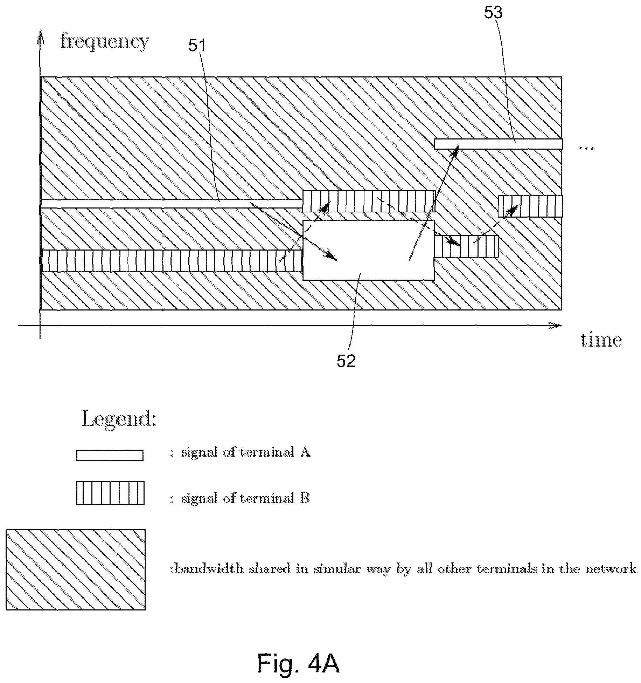

Figures 4A-4C show transmission schemes according to embodiments of the present invention. For clarity, each Figure shows a sequence of transmission slots assigned to two terminals (Terminal A, Terminal B). It will be understood that other terminals can operate at the same time as these terminals, using other transmission slots which differ in time and frequency to the slots assigned to Terminal A and Terminal B.

In the scheme of Figure 4A, a terminal transmits across a sequence of transmission slots. The slots vary in duration. The slots also vary in bandwidth, allowing the terminal to transmit at different symbol rates. There is no rigid allocation of frequency carriers to transmission slots of a particular symbol rate. Terminal A transmits across a sequence of transmission slots 51, 52, 53.

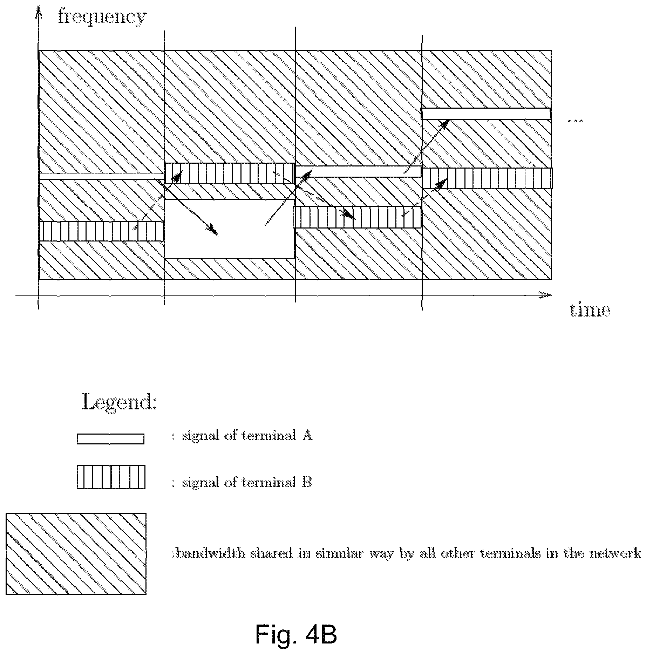

In the scheme of Figure 4B, a terminal transmits across a sequence of transmission slots of equal, fixed, duration. The slots do not vary in duration. The slots vary in bandwidth, allowing the terminal to transmit at different symbol rates. There is no rigid allocation of frequency carriers to transmission slots of a particular symbol rate.

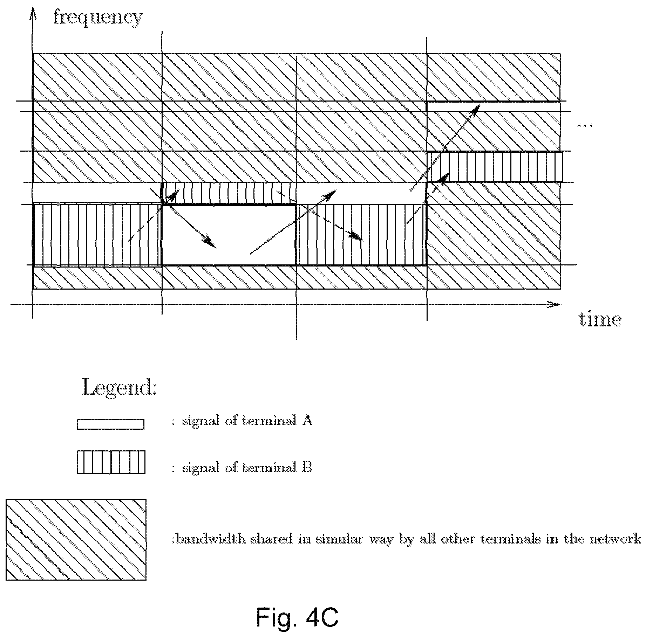

In the scheme of Figure 4C, a terminal transmits across a sequence of transmission slots of equal, fixed, duration. The slots do not vary in duration. The slots vary in bandwidth, allowing the terminal to transmit at different symbol rates. However, frequencies are assigned to slots of a particular bandwidth.

Although, advantageously, transmission slots are fully separated in both frequency and time, it is possible for there to be some controlled frequency overlap between transmission slots. This will incur some loss in error performance (e.g. increased bit error rate or packet loss). There can be some frequency overlap between transmission slots to the extent that the error the overlap causes is acceptable to the network operator.

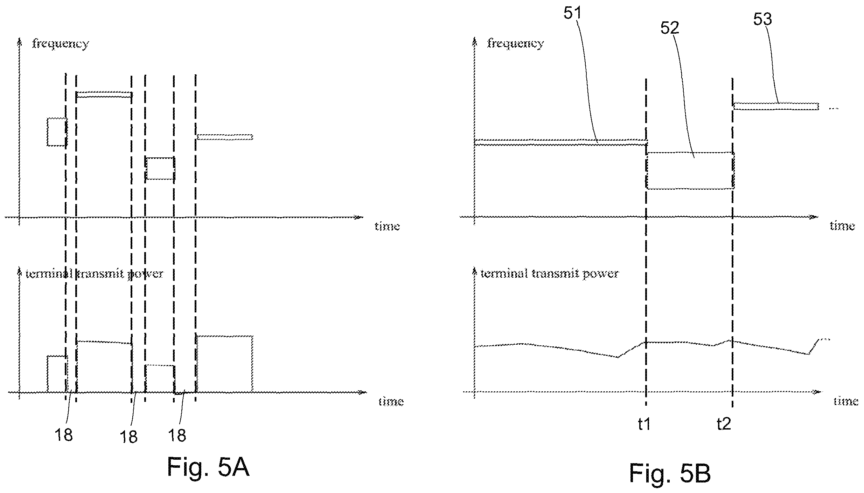

Figures 5A and 5B show the return link signal transmitted by an individual terminal over a period of time. Figure 5A shows a conventional MF-TDMA terminal, and Figure 5B shows a terminal which operates according to an embodiment of the present invention. Figure 5A shows a graph of frequency against time for a return link (RL), illustrating transmission slots of a single conventional dynamic-slot MF-TDMA terminal. Figure 5A also shows a graph of possible power against time of a conventional MF-TDMA terminal over the same time period.

Figure 5B shows a graph of frequency against time for a reverse link (RL), illustrating a sequence of transmission slots 51, 52, 53 of a single terminal 40 according to an embodiment of the invention. Figure 5 also shows a graph of possible power against time over the same time period. The power level can vary during a transmission slot (as shown in Figure 5B) or the power level can remain constant. The transition between transmission slots at times t1 and t2 is substantially immediate and does not interrupt the transmitted signal. Figure 5B also shows that bandwidth of the reverse link signal transmitted by a terminal 40 can vary between slots. Bandwidth of slot 52 is greater than the bandwidth during slots 51, 53. Figure 5B also shows that the duration of a transmission slot can vary between slots, although it can be advantageous for ease of operation to choose a single fixed transmission slot duration value. Terminals 40 do not change transmit frequency or symbol rate (occupied spectrum) without prior knowledge of the hub 20. In an embodiment, the return link time-and-frequency plan is periodically revised by the scheduler 26 at the hub 20 and communicated via the forward link 31 to each terminal 40.

A hub in the system 5 knows in advance, and to a sufficient accuracy, when to expect frequency changes and/or symbol rate changes in a return link. Terminals change frequency and/or symbol rate at instants synchronised to the transmit symbol clock, these instants being dictated in advance by the hub. This allows the hub to anticipate and counteract frequency changes such that the hub stays synchronised to the return link signal, without the need to re-acquire lock onto the terminal signal after a carrier frequency or symbol rate transition, as would normally occur in MF-TDMA burst receivers.

Advantages of a transmission scheme with continuous transmission include: optimum usage of satellite channel capacity (in terms of achievable bits/s/Hz); minimum receiver hardware complexity, and thus cost, for a given total return link bandwidth to be processed.

The process of synchronising terminals will now be described in detail. System synchronisation ensures continuous communication between the hub 20 and every individual terminal, as well as minimum interference between the RL signals 32 transmitted by terminals 40 in the system. It also prevents transmission regulation violations. The system synchronisation mechanism supports variable RL symbol rate and RL carrier frequency. The system synchronisation mechanism is also sufficiently robust to cope with typical channel parameter statistics encountered in a satellite channel, e.g. terminal oscillator accuracy and drift, satellite local oscillator accuracy and drift, propagation delay variations due to satellite movement (resulting in a time variable roundtrip time), and propagation delay variations in the footprint of the satellite.

Each terminal 40 acquires frequency synchronisation with a stable common reference in the system. This has two purposes. Firstly, once a hub demodulator has acquired the signal of one terminal 40 on a transponder (and thus has established the satellite LO frequency offset which can amount to order of some 100 kHz), the frequency uncertainty on the other terminals transmitting in this transponder will be limited to the order of some kHz. This fact helps reducing the network boot time. Secondly, this guarantees that the terminal carrier frequency respects transmit regulations over time. In an embodiment of the invention, a GEO satellite is used and the forward link (FW) symbol clock is treated as the reference in the system. Every terminal receives the FW link 32, and thus automatically tracks and 'knows' the effective FW symbol clock. Thus a terminal can synthesize any other frequency by considering the received symbol clock as a reference. The expected doppler and doppler rate effect on the symbol rate results from periodic variations in hub-satellite-terminal distances. For GEO satellites, this amounts to a negligible periodic excursion from the nominal symbol rate.

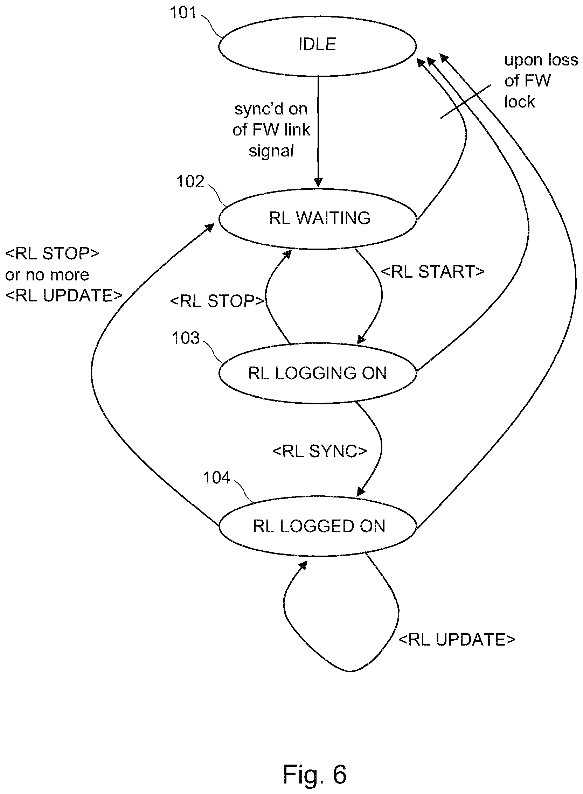

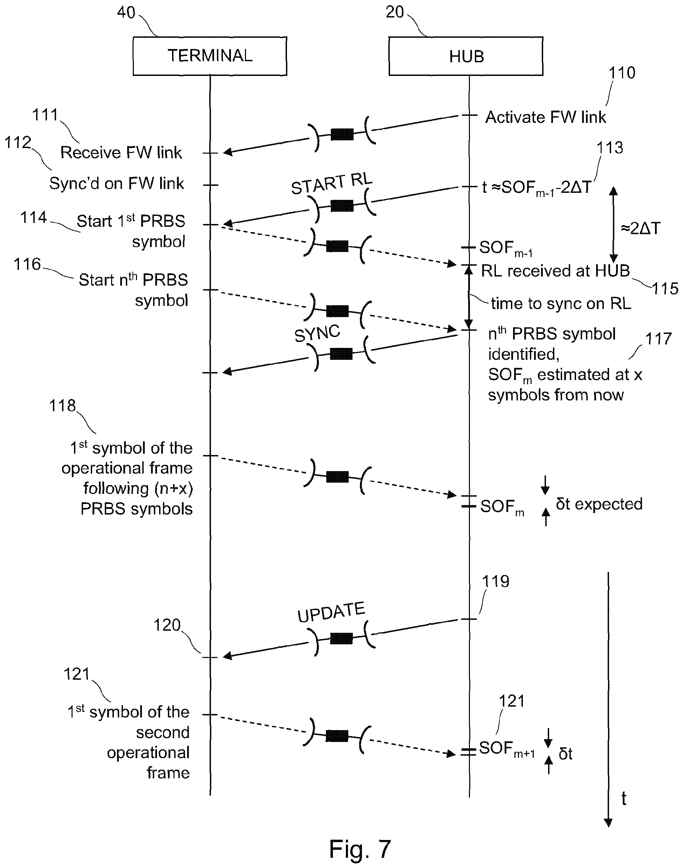

A terminal 40 has four operating modes or states 101-104, shown in the state diagram of Figure 6. Figure 7 shows a timeline of communication between the hub 20 and a terminal 40. At time 110, the hub 20 starts transmitting a forward link signal. The terminal 40 starts in the 'IDLE' state 101 and remains in that state until it is frequency slaved to the tracked forward link symbol clock. The terminal receives the FW link at time 111 and acquires frequency synchronisation at time 112. When the terminal is synchronised it receives RL Look-Up Tables in the FW link signal. These tables contain information about the finite set of permitted RL frame structures (coupled to the finite set of nominal RL transmission rates). When these conditions are satisfied, the terminal enters the 'RL WAITING' state 102. Terminal TX circuitry is muted while in the 'IDLE' state 101 or 'RL WAITING' state 102.

The terminal remains in the 'RL WAITING' state 102 until it has received a <RL START> signal from the hub 20 indicating the RL carrier frequency plus indoor unit power level at which it may start transmitting an identification sequence. A suitable identification sequence is a Pseudo-Random Binary Sequence (PRBS) with a given polynomial and initial state. The hub transmits the <RL START> signal at time 113. Upon reception of this <RL START> signal, the terminal enters the 'RL LOGGING ON' state 103 and starts transmitting (time 114) the PRBS symbol sequence at the requested carrier frequency. In an embodiment, the PRBS sequence is BPSK modulated. That is, the terminal transmits BPSK symbols which represent the PRBS sequence. The terminal 40 continues transmitting this PRBS sequence, while keeping track of the number of already transmitted PRBS symbols, until at some point it either receives a <RL SYNC> message or a <RL STOP> message from the hub 20. The hub sends the <RL SYNC> message at time 117. The <RL SYNC> message indicates that the hub 20 was able to sync to the signal sent by the terminal, and identifies how many PRBS symbols the terminal must have transmitted in total, before it may send the very first symbol of the first operational frame. This first symbol will be called the Start of Frame (SOF) symbol. Upon reception of the <RL SYNC> message, the terminal enters the 'RL LOGGED ON' state 104.

At any time the hub 20 may decide to send a <RL STOP> message, which causes the terminal to mute its transmitter and brings it back into the <RL WAITING> state. The hub 20 could, for example, send a <RL STOP> message while the terminal 40 is still in the 'RL LOGGING ON' state 103 because the HUB fails to lock to the RL signal from this terminal.

In 'RL LOGGED ON' state 104, the terminal 40 transmits its first frame carrying real payload after having sent the required number of PRBS symbols as communicated in the <RL SYNC> message. All parameters required to completely define the first frame are contained in the <RL SYNC> message. These include symbol rate, modulation and coding scheme for the payload (called modcod), carrier frequency, power level. If the terminal is required to change symbol rate and/or carrier frequency at the first symbol of the operational frame, it does this in a phase continuous fashion, synchronised to the SOF symbol.

The terminal leaves the 'RL LOGGED ON' state 104 for the 'RL WAITING' state 102 if it receives a <RL STOP> message from the hub (this can be the consequence of a bandwidth management decision from the hub scheduler, or simply because the hub can no longer synchronise to the terminal's signal and wants it to shut down for safety reasons).

While in 'RL LOGGED ON' state 104, the terminal must receive an <UPDATE> message from the hub prior to having sent all required symbols of the current frame. At 119 the hub sends an <UPDATE> message which instructs the terminal 40 about signal parameters to be used as from the next SOF symbol. The parameters include: carrier frequency, symbol rate, modcod, power. The <UPDATE> message is received at the terminal at 120. At 121, the terminal transmits the first symbol (SOF) of the second operational frame. The hub 20 receives this SOF symbol at 121. The <UPDATE> message also conveys to the terminal that the hub is still alive. If the RL demod function in the hub should fail unexpectedly, it will send no more <UPDATE> messages and the terminal returns to the <RL WAITING> state 102. Regardless of the actual terminal state, loss of lock on the FW link 31 is a cause to switch immediately back to 'IDLE' state 101.

To summarise the process described above, a terminal 40 is initially synchronised to the frame, or heartbeat, of the overall system by maintaining a count of the number of transmitted PRBS symbols and uses this count, and the information received from the hub 20 in a <SYNC> message, to time the start of the first symbol of an operational frame. Subsequently, the terminal can receive an instruction to apply a correction to the symbol rate, to ensure that symbols from the terminal arrive at the hub 20 at a required time. It can be seen that the time offset δt between the time at which the hub receives SOF symbol SOFₘ₊₁, and the actual time of SOFₘ₊₁, is already shorter than for SOFₘ, and this time offset δt should converge towards substantially zero once the terminal has been logged on for a while.

### HUB behaviour

The hub's notion of time will be called t_{H}. We can e.g. assume that t_{H} has the interpretation of seconds, counting from minus infinity to plus infinity. A common hub reference time is distributed to all receivers in a hub 20. Notice that it is not required to distribute the hub time to the terminals, nor is it required for a terminal to maintain a notion of time, in contrast with common practice in MF-TDMA networks. Dynamic RL parameter adjustments are applied on a heartbeat equal to the frame rate. The system frame duration shall be denoted as T_{F} (example order of magnitude: 1 second). All RL receivers 22 know the sequence of values t_{H}=SOFₘ₋₁; SOFₘ; SOFₘ₊₁,.... that correspond to frame boundaries. When the system is properly synchronised, the SOF symbols sent by all terminals 40 arrive at the hub receive antenna more or less at a time known to the hub as a frame boundary. This is possible, despite the fact that all terminals may transmit at different symbol rates, because only a finite set of nominal symbol rates is supported in the RL. Moreover, the exact frame duration is chosen such that an integer number of symbols fits in the frame duration for all permitted nominal symbol rates.

As described above, the hub activates the RL of an individual terminal by sending it a <RL START> message. The hub assumes the terminal is properly synchronised to the FW link, and thus will promptly react to the activation message. For a terminal to send its first real frame at t_{H} = SOFₘ, the hub is required to send the activation signal <RL START> at about t_{H} = SOFₘ₋₁-2ΔT, where 2ΔT is the round-trip transmission delay (hub to satellite to terminal to satellite to hub). When doing so, the hub can activate a corresponding demodulation process at a receiver to start signal acquisition attempts as soon as t_{H} = SOFₘ₋₁.

When a demodulation process at a receiver 22 is properly synchronised to the signal emitted by a terminal, it is at some point able to identify a certain received PRBS symbol as being the n-th symbol of the PRBS sequence. The receiver 22 knows the hub time associated to this n^{th} symbol. The receiver 22 also knows the hub time of the next due SOF event (in Figure 7 this is SOFₘ). The receiver 22 calculates the time difference between the next SOF and hub time associated to this n^{th} PRBS symbol. This time difference can be translated (rounded) to an integer number of symbols (say x symbols). By means of a <SYNC> message, the receiver now instructs the terminal to send a total of (n+x) PRBS symbols prior to sending the first real SOF symbol of an operational frame carrying a payload of data. The receiver continues tracking the terminal's signal and now assumes that the first SOF symbol of the first payload-carrying frame will be found x symbols later than the symbol identified as the n^{th} PRBS symbol. As such, it also knows to switch its nominal carrier and symbol clock frequencies, in a phase continuous manner, to the new values after having received and counted (n + x) PRBS symbols. Note that this mechanism ensures that the first SOF symbol will be received roughly at hub time SOFₘ. The error δt is largely due to the rounding operation involved when determining the nearest integer value x.

Once a terminal is properly logged-on, the synchronisation between this specific terminal and the hub 20 is based on counting symbols, either transmitted symbols or received symbols. Both the hub and the terminal have access to a static Look-Up Table (LUT) which specifies, for every (modcod, symbol rate) combination, how many symbols should be transmitted (or received) in a frame 10. Thus both terminal 40 and receiver 22 know when to inject/expect the next SOF symbol.

For as long as a terminal is logged on, the hub signals during the current frame period which RL parameters (modcod, symbol rate, carrier frequency, power) should be used as from the next SOF symbol onward. This is achieved by means of <UPDATE> messages shown in Figure 7. Associated with every <UPDATE> message is the knowledge how many symbols should be transmitted/received in the next frame. The hub sends an <UPDATE> message more than 2ΔT + ε in advance of the next upcoming frame boundary, where ε is a suitable margin. If a terminal has not received a new <UPDATE> message when all symbols of the current frame have been sent, it assumes that the HUB RL process is in error and reverts to the 'RL WAITING' state 102 out of precaution.

For as long as a terminal is logged on, the hub receiver 22 compares the tracked terminal carrier frequency to the nominally expected value. This information is only used for system health monitoring.

A hub demodulation process typically tracks every individual terminal's signal in closed carrier loop, thus natively copes with frequency drift very well without introducing extra complexity.

Advantageously, the PRBS sequence used by frequency-neighbouring terminals during the log-on process use different PRBS polynomials.

So far, it has been described how an individual RL 32 between a specific terminal and the HUB can remain synchronised essentially by counting symbols on either side of the link. The following describes how the RL signals of all terminals can be made to change carrier frequency and symbol rate more or less simultaneously, so as to minimise interference amongst the terminals 40. At all times a hub receiver compares the measured hub-time of a tracked SOF symbol to the target SOF time defined by the hub. This time difference can vary for several possible reasons. In order for the difference to converge towards zero, the 'next symbol rate' value in the <UPDATE> message comprises a nominal value (belonging to a known permitted finite set) and an offset value (typically a few ppm of the nominal value). This means that even when the hub scheduler momentarily does not request for a nominal symbol rate change, the hub receiver 22 may have observed a time skew trend and request, via the offset field, a symbol rate increment/decrement that will compensate a fraction of this skew over a frame's length.

The purpose of this slow time correction loop over the satellite is to improve the SOF alignment of all terminals over time, as well as to compensate for long-term symbol clock drift. Initially, the SOF time error with respect to target will be large due to the rounding operation to a nearest integer number of symbols in the terminal log-on phase. After a while, the time correction loop will have reduced the offset to expected variations due to satellite movement. Post log-on, terminal SOF deviation with respect to hub SOF is assumed to be statistically uncorrelated between terminals. After a while, the log-on rounding error towards nearest integer number of symbols x no longer determines the deviation. The prime causes of deviation are then the time variable transmission delay ΔT and the jitter induced by the operation of the SOF-alignment loop. The peak-to-peak deviation over the terminal population will cause short-lived interference between terminal signals around SOF events. To mitigate this, it is advantageous for the SOF symbol and last symbol of an operational frame to be zero-energy symbols. This way, the RL frequency plan is reshuffled while the RL is momentarily muted. The muting is performed in a clean spectral way, because muting occurs before a pulse-shaping filter. When required, terminal signal level can also be adjusted in between zero-energy symbols to maintain a given power spectral density despite potential symbol rate changes.

Advantageously, the system 5 periodically revises the return link frequency plan and sends this information (the sequence information) to all terminals 40. The time between revisions is called a heartbeat period and can take a value of the order of, for example, 500ms - 1second. Advantageously, the heartbeat is (exactly) equal to an integer number of channel symbol periods, regardless of the RL symbol rate in use. This, in turn, requires limiting available return link symbol rates to a finite set of discrete supported symbol rates, such that the heartbeat period is expressable as an integer number of symbols for every symbol rate in the finite set. The system has a dynamic RL, where multiple terminals share the same frequency band but individually change their spectral occupation (centre frequency and/or occupied bandwidth) over time. Terminals are controlled such that changes in spectral occupation by all terminals occur at substantially the same time. If this requirement is not met, demodulation of every given RL signal will be seriously hindered by (frequency-)interfering signals from other terminals. One way to assure system synchronisation is by defining a common heartbeat for all return links 32. This heartbeat is the frame rate 1/T_{F}. Terminals are only allowed to change their spectral occupation at the Start of a new Frame (SOF). Thus, once every T_{F} seconds. The system synchronisation algorithms described above require this frame duration T_{F} to nominally equal an integer number of symbol periods, regardless of the symbol rate in use. Stated more formally: let {Rᵢ} be the set of permissible RL symbol rates. Then,
*T_{F} · Rᵢ* is integer, ∀*i*
Any symbol rate is permissible as long as it is a rational multiple of every other permissible symbol rate.

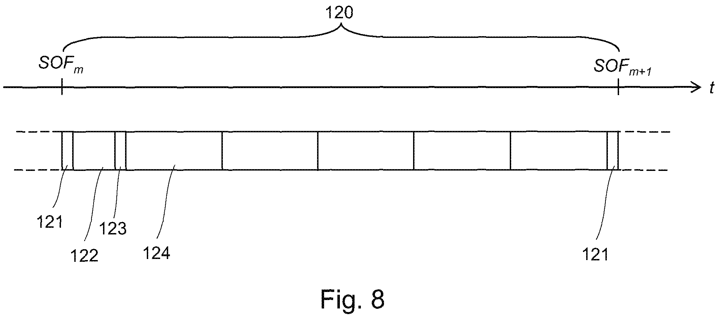

Figure 8 shows an example structure of a physical layer frame 120. The frame is designed to carry as large a payload as possible, with a minimal amount of overhead, to maximise bandwidth efficiency of the return link. It is possible for an embodiment of the frame to contain payload data with no overhead at all. However, it is advantageous to include a small amount of overhead. A configurable number of null (zero energy) symbols 121 can be included at the beginning and, optionally, at the end of the frame 120. During a null symbol, no carrier is transmitted. The null symbols help to mitigate cross-terminal interference due to small mismatches in timing alignment with respect to frame boundaries. The preamble 122 consists of a configurable sequence of symbols. It is used in the receiver to assist carrier phase tracking and estimate thermal noise power density on the link. A codeword has a particular length (number of bits) and a symbol of a particular modulation scheme has a finite capacity (bits per symbol.) For some combinations of symbol rate plus modulation and coding scheme an amount of stuffing symbols may be required because the payload section of the frame (expressed in symbols) is not an integer multiple of the codeword length (also expressed in symbols). Advantageously, these stuffing symbols 123 are inserted after the preamble 122, rather than at the end of the frame, because stuffing symbols do not carry useful data, and can be used to 'absorb' any remaining transient carrier sync effects which may occur immediately after the preamble 122. Finally, the remaining part of the frame contains an integer number of codewords 124. Each codeword consists of a number of transmission symbols. Figure 8 is not drawn to scale. Typically, a frame has a length of the order of 1 second and the null symbols occupy a period of a few µs.

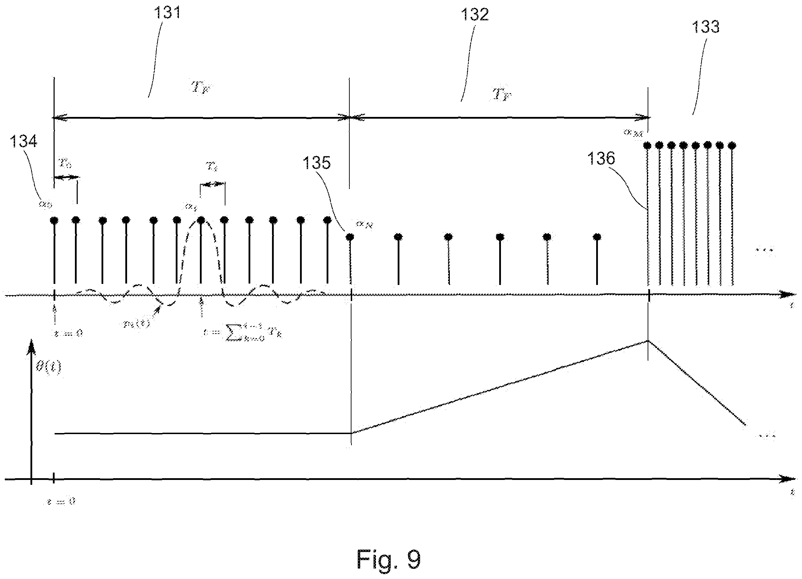

Figure 9 shows an example BPSK symbol stream, and carrier phase trajectory θ(t). Two complete frames 131, 132 are shown, along with part of a third frame 133. Each new frame begins with a respective Start Of Frame (SOF) symbol 134, 135, 136. Each frame has the same duration T_{F}. In this example, the frames 131, 132, 133 each have a different symbol rate. Frame 132 has a lower symbol rate than frame 131, and frame 133 has a higher symbol rate than frame 131 and frame 132. It will be understood that Figure 9 shows the baseband signal stream, and the symbols in each of frames 131, 132, 133 can be transmitted at different carrier frequencies. If, at the hub side of the link, the SOF symbols are received exactly at hub-time instants associated with a frame boundary, then the terminal is perfectly synchronised to the system heartbeat, which is the frame rate. Note that the carrier phase θ(t) follows a continuous trajectory with connected straight-line segments. The slope of the segments (thus the carrier frequency) is allowed to change exactly at SOF symbols 134-136.

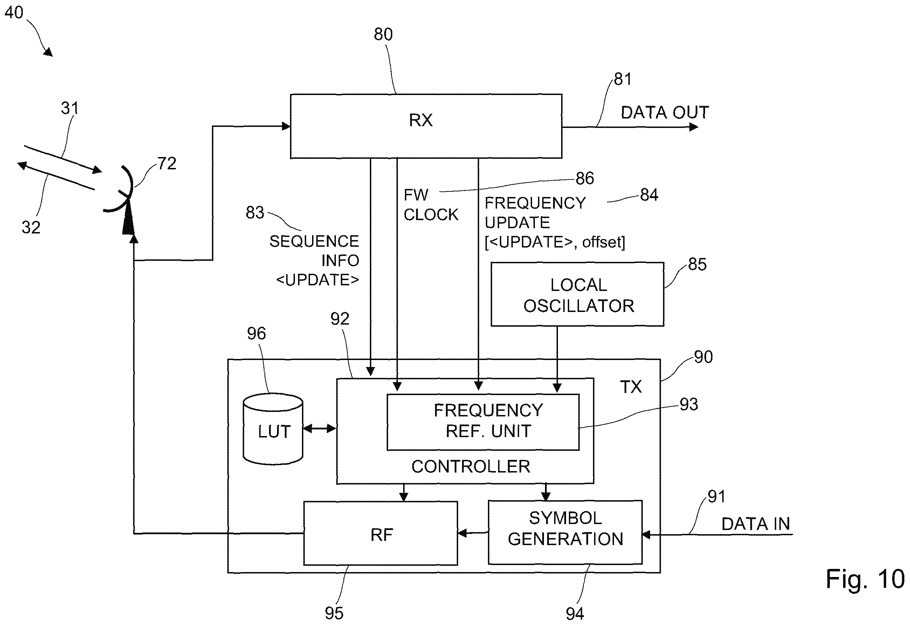

Figure 10 schematically shows a terminal 40 for use in the satellite transmission system. The terminal comprises an antenna 72 for receiving the forward link RF signal 31 and transmitting the return link RF signal 32, a receiver 80 and a transmitter 90. Antenna 72 typically down-converts the forward link RF signal 31 to an IF band and forwards this to the receiver 80. Receiver 80 receives the (down-converted) forward link signal 31 and performs demodulation and decoding of the received signal. Data is output 81. Receiver 80 extracts, from the forward link signal, information about the sequence of transmission slots that has been allocated to the terminal on the return link 32. This information 83 is received in <UPDATE> messages and forwarded to the controller 92. Receiver 80 also extracts, from the forward link signal, information 84 which instructs a change in transmission rate. This information 84 is received as an offset field of <UPDATE> messages and forwarded to the controller 92. Receiver 80 also extracts, from the forward link signal, information about the FW link transmission clock rate. Information 84, 86, and an output of a local oscillator 85, is applied to a frequency reference unit 93. Unit 93 maintains a stable clock rate effectively slaved to the HUB frequency reference which helps to ensure that the terminal 40 respects transmit regulations.

Advantageously, each terminal 40 generates a reverse link (RL) signal 32 in multiple stages. A first stage 94 generates a modulated signal comprising transmission symbols (commonly called baseband signal in the art) and a second stage 95 up-converts this generated signal to RF. Stage 94 is a wideband transmitter 95 which selectively transmits the transmission symbols on one (or more) of a set of frequency carriers used by the transmission scheme. Stage 94 dynamically adjusts the carrier frequency and symbol rate in a phase continuous fashion. The carrier frequency can vary within a frequency band. Frequency changes are synchronised to transmit symbol timing. Level adjustments in order to maintain a given target power spectral density across symbol frequency 'jumps' are also performed by stage 94. Stage 94 generates transmission symbols at a required rate. These symbols contain coded user data. Advantageously, the RF stage 95 is not dynamically adjusted and is programmed to statically transmit into the L-band frequency region that will result in the correct outdoor unit TX frequency range after up-conversion. Transmitter 90 comprises an input 91 for receiving data. Controller 92, and sequence information 83, determines the time and frequency band of each transmission slot. Controller 92, and sequence information 83, also determines the symbol rate to be used during each transmission slot. A store 96 stores a look-up table (LUT) of symbol rates and the corresponding number of transmission symbols. The LUT is used to convert the symbol rate, signalled in the <UPDATE> message, to a number of symbols that the terminal must transmit during the next frame.

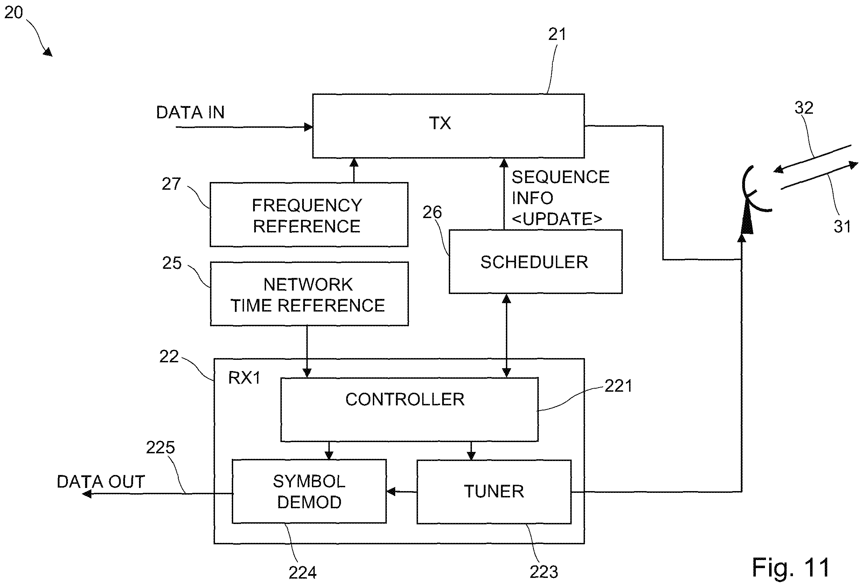

Figure 11 schematically shows, in more detail, apparatus provided at the hub 20 of the satellite transmission system. The hub 20 generates the forward link RF signal 31 and receives the return link RF signal 32. The actual transmission and reception of these signals at an antenna may occur at a ground station which is located remotely from the hub 20. Hub comprises a transmitter 21 for generating the forward link signal 31 and a receiver 22 for receiving the return link signal 32. Transmitter 21 receives data for transmission and performs coding and modulation of the signal, as well as multiplexing of the signals destined for different terminals 40. Transmitter 21 also includes, in the forward link signal 31, information about the sequence of transmission slots that has been allocated by scheduler 26 to each terminal 40 on the return link 32. A stable frequency reference (e.g. local oscillator) is applied to the transmitter 21 and used by the transmitter to generate transmission symbols at a controlled rate on the forward link 31. Advantageously, there is a bank of RL receivers, with one RL receiver 22 dedicated to each active terminal 40 in the system. Receiver 22 comprises an input for receiving an RF signal (typically down-converted to an IF). A tuner 223 tunes to the particular frequency band known to be used by the terminal 40 at each instant in time. Symbol demodulation function 224 demodulates received transmission symbols at a required rate. This also includes decoding received data. Controller 221 receives the sequence information from scheduler 26 and uses the sequence information to control the tuner 223 to adjust to the frequency band known to be used by each transmission slot of the particular terminal 40, at a time which is known to be the start time of the transmission slot. Controller 221 also controls the symbol demodulation function 224 to vary the symbol rate according to the sequence information. Scheduler 26 receives requests from active terminals which specify the transmission needs of the terminals. Scheduler 26 allocates a sequence of transmission slots to each active terminal based on their transmission needs, and may use various prioritisation criteria to fairly distribute resources among the terminals. Various scheduling algorithms are known in the art.

Advantageously, all terminals 40 change carrier frequency and/or symbol rate in a phase continuous fashion, or with a predictable and limited phase discontinuity. This makes it easier to fulfil transmit regulation requirements, because there are no abrupt changes in signal value, which would generate spurious (high energy) frequency components. This requirement allows further simplifications to hub receiver design and allows return link efficiencies very close to satellite channel capacity.

In the system described above, a scheduler attempts to allocate each terminal a transmission slot which is matched to the bandwidth demands of the terminal at that time. Different portions of the frequency have slots of different bandwidth (e.g. in Figure 5B slot 52 has a larger bandwidth than slots 51, 53.) If a terminal does not have any data to transmit, it can either be (i) allocated a transmission slot with a nominal bandwidth, or (ii) logged off, returning the terminal to state 102. Option (i) has an advantage in that it allows the terminal to continue transmitting, such that it can later make a request for bandwidth, and receive an allocation with minimal delay, without the need to log-on. Whether a terminal is operated using option (i) or (ii) will depend on factors such as the number of free transmission slots.

The embodiment described in detail is a dynamic scheme, where a terminal changes symbol rate and/or carrier frequency as instructed by the hub. A static scheme is also possible, where the RL frequency plan is never updated. In this alternative embodiment, there is no need for all terminals to be SOF-symbol-aligned. In this alternative, the terminal can switch to normal frame mode at a (static) operational symbol rate after having transmitted a static default number of PRBS symbols also known to the hub. The result of this is that all terminals keep sending SOF symbols at some random time offset from the hub SOF. This does not harm individual communication between a terminal and the hub since it is sufficient that a RL receiver knows where to find the codewords in the received symbol stream. In practice, there is little cost involved in SOF-aligning all terminals, especially if the system also supports the dynamic scheme. Therefore, the system can SOF-align all terminals even in a static RL plan scenario, for the sake of a unified approach and reduced test space.

The system can have any one of the following topologies: star; multi-star; partly meshed star network where terminal-to-hub and terminal-to-terminal communication links can share bandwidth. The partly meshed star network has a 'master' hub and a plurality of slaving hubs/terminals with 'remote' RL receivers. All of the remote receivers synchronise to one common virtual time reference. The time reference can be Global Positioning System (GPS) time. Remote receivers obey commands sent by a scheduler in the master hub.

The invention is not limited to the embodiments described herein, which may be modified or varied without departing from the scope of the invention, as defined by the appended claims.

## Claims

1. A method of operating a terminal (40) in a wireless multiple access communication system (5) comprising a plurality of terminals (40), a forward link (FW) to the terminal and a return link (RL) from the terminal, wherein the plurality of terminals share the same frequency band but change their centre frequency and/or occupied bandwidth over time,
the method comprising:
acquiring frequency synchronization with a stable common reference in the system;
receiving, on the forward link (FW), information instructing the terminal (40) the symbol rate and centre frequency to be transmitted during a subsequent transmission slot in the return link (RL), , each transmission slot being defined as a time slot and the centre frequency;
transmitting, at one of a set of different symbol rates, the set of symbol rates by the terminal such that the time-duration of the transmission slot of the return link signal is an integer multiple of a symbol period, whereby the transmission slot comprising a number of transmission symbols and, at the beginning and/or end, a number of zero-energy symbols;
transmitting a return link signal from the terminal across a sequence of transmission slots at a symbol rate and a centre frequency based on the acquired frequency synchronization and received information, wherein the carrier phase of the return link signal is continuous at boundaries of transmission slots; and
adjusting the centre frequency and the symbol rate of the transmission slot at the start of a new transmission slot;
maintaining the synchronization by counting transmitted symbols.

2. A method according to claim 1, wherein the frequency synchronization is acquired with the forward link (FW).

3. A method according to claim 2, further comprising acquiring synchronisation with a hub (20) of the system by:
receiving, from the hub, an instruction to start transmitting identification symbols on the return link;
transmitting, on the return link, identification symbols and counting the number of transmitted identification symbols;
receiving an instruction to begin transmitting a user data payload in a first transmission slot after a specified number of transmitted identification symbols; and
transmitting, in the first transmission slot, a user data payload after transmitting the specified number of identification symbols.

4. A method according to claim 2 or 3, wherein each terminal transmits a start of frame symbol (SOF) at the start of each transmission slot, the method further comprising receiving an instruction to adjust the symbol rate on the return link in order to time align the start of frame symbol sent by the terminal with start of frame symbols sent by other terminals in the system.

5. A method of operating a hub (20) of a wireless multiple access communication system (5) comprising a plurality of terminals (40), a forward link (FW) from the hub to the terminals in the system and a return link (RL) from a terminal to the hub, wherein the plurality of terminals share the same frequency band but change their centre frequency and/or occupied bandwidth over time,
the method comprising, at the hub:
allocating a terminal in the system a sequence of transmission slots, each transmission slot being defined as a time slot and the centre frequency;
allocating a return link receive function for the reception of the return link signal from each terminal in the network; and,
causing a receiver of the terminal to adjust the centre frequency and symbol rate at the start of a new transmission slot substantially in synchronism with a change in the centre frequency of the signal received from the terminal by providing information instructing the terminal the symbol rate and centre frequency to be transmitted during a subsequent transmission slot in the return link, the information allowing the terminal to determine the number of non-zero energy and zero-energy transmission symbols to be transmitted during the subsequent transmission slot in the return link, each transmission slot being defined as a time slot and the centre frequency;
wherein the carrier phase of the return link signal is continuous at boundaries of transmission slots; and
wherein the time-duration of the transmission slot of the return link signal is an integer multiple of the symbol period.

6. A method according to claim 5 further comprising monitoring the timing of the terminal and transmitting an instruction to the terminal to modify the symbol rate without substantial interrupt of the return link signal.

7. A method according to claim 5 or 6 further comprising transmitting information to the terminal identifying a subsequent transmission slot, and wherein the information allows the terminal to determine a number of transmission symbols to be transmitted during the subsequent transmission slot.

8. A method according to claim 7 further comprising periodically determining transmission needs of terminals in the system and transmitting the information identifying the sequence of transmission slots on the basis of the determined transmission needs and return link quality indicators such as signal-to-noise ratio and terminal power amplifier saturation.

9. A method according to any one of claims 5 to 8 further comprising acquiring synchronisation with a terminal of the system by:
transmitting an instruction to the terminal to start transmitting identification symbols on the return link;
receiving, on the return link, identification symbols transmitted by the terminal and counting the number of identification symbols received from the terminal;
determining a start time for the terminal to transmit user payload data in a first transmission slot based on a number of transmitted identification symbols;
transmitting an instruction to the terminal to begin transmitting user payload data in the first transmission slot after the determined number of identification symbols.

10. A wireless communication terminal (40) for use in a wireless multiple access communication system (5) comprising a plurality of terminals (40) and wherein the plurality of terminals (40) share the same frequency band but change their centre frequency and/or occupied bandwidth over time,
the terminal (40) comprising:
a receiver arranged to acquire frequency synchronization with a stable common reference in the system (5) and to receive a forward link signal (FW), the forward link signal comprising information instructing the terminal the symbol rate and centre frequency to be transmitted during a subsequent transmission slot in the return link, each transmission slot being defined as a time slot and the centre frequency, and
a transmitter arranged to transmit a return link signal (RL) across a sequence of transmission slots at a symbol rate and a centre frequency based on the acquired frequency synchronization and received information,
wherein the transmitter is arranged to adjust the centre frequency and the symbol rate at the start of a new transmission slot and
wherein the transmitter is further arranged to transmit, at one of a set of different symbol rates, the set of symbol rates such that the time-duration of the transmission slot of the return link signal is an integer multiple of a symbol period, whereby the transmission slot comprising a number of transmission symbols and, at the beginning and/or end, a number of zero-energy signals signal;
wherein the carrier phase of the return link signal is continuous at boundaries of transmission slots.

11. A wireless communication apparatus for use at a hub (20) of a wireless multiple access communication system (5) comprising a plurality of terminals (40) and wherein the plurality of terminals (40) share the same frequency band but change their centre frequency and/or occupied bandwidth over time, the wireless communication apparatus comprising:
a transmitter arranged to transmit a forward link (FW) to the plurality of terminals (40) in the system;
a receiver arranged to receive a return link (RL) signal from one of the terminals (40);
a scheduler arranged:
- to schedule a sequence of transmission slots for the return link of each terminal,
- to provide information instructing the terminal the symbol rate and centre frequency to be transmitted during a subsequent transmission slot in the return link, the information allowing the terminal to determine the number of non-zero energy and zero-energy transmission symbols to be transmitted during the subsequent transmission slot in the return link, each transmission slot being defined as a time slot and the centre frequency, the time-duration of the transmission slot of the return link signal being an integer multiple of the symbol period and the carrier phase of the return link signal being continuous at boundaries of transmission slots, and
- to cause the receiver to adjust the centre frequency and symbol rate at the start of a new transmission slot substantially in synchronism with a change in the frequency of the return link signal received from the terminal.

12. Software comprising instructions which, when executed by a processor, cause the processor to perform the method according to any one of claims 1 to 9.

## Patentansprüche

1. Verfahren für den Betrieb eines Endgerätes (40) in einem drahtlosen Mehrfachzugriff-Kommunikationssystem (5), umfassend eine Vielzahl von Endgeräten (40), eine Vorwärtsstrecke (FW) zum Endgerät und eine Rückwärtsstrecke (RL) vom Endgerät, wobei die Vielzahl von Endgeräten dasselbe Frequenzband teilt, aber ihre Mittenfrequenz und/oder besetzte Bandbreite mit der Zeit ändert, wobei das Verfahren umfasst:
Herstellen einer Frequenzsynchronisation mit einer stabilen gemeinsamen Referenz im System;
Empfangen von Informationen, die dem Endgerät (40) die in einem nachfolgenden Sendeschlitz der Rückwärtsstrecke (RL) zu sendende Symbolrate und Mittenfrequenz anweisen, auf der Vorwärtsstrecke (FW), wobei jeder Sendeschlitz als ein Zeitschlitz und die Mittenfrequenz definiert ist;
Senden des Satzes von Symbolraten mit einer von einem Satz verschiedener Symbolraten durch das Endgerät derart, dass die Zeitdauer des Sendeschlitzes des Rückwärtsstreckensignals ein ganzzahliges Vielfaches einer Symbolperiode ist, wobei der Sendeschlitz eine Anzahl von Sendesymbolen und am Anfang und/oder Ende eine Anzahl von Nullenergie-Symbolen umfasst;
Senden eines Rückwärtsstreckensignals vom Endgerät über eine Sequenz von Sendeschlitzen mit einer Symbolrate und einer Mittenfrequenz, basierend auf der hergestellten Frequenzsynchronisation und den empfangenen Informationen, wobei die Trägerphase des Rückwärtsstreckensignals an den Grenzen der Sendeschlitze kontinuierlich ist; und
Anpassen der Mittenfrequenz und der Symbolrate des Sendeschlitzes am Anfang eines neuen Sendeschlitzes; Aufrechterhalten der Synchronisation durch Zählen der gesendeten Symbole.

2. Verfahren nach Anspruch 1, wobei die Frequenzsynchronisation mit der Vorwärtsstrecke (FW) hergestellt wird.

3. Verfahren nach Anspruch 2, ferner umfassend das Herstellen einer Synchronisation mit einem Knoten (20) des Systems durch:
Empfangen einer Anweisung vom Knoten, das Senden von Identifikationssymbolen auf der Rückwärtsstrecke zu beginnen;
Senden von Identifikationssymbolen auf der Rückwärtsstrecke und Zählen der Anzahl der gesendeten Identifikationssymbole;
Empfangen einer Anweisung, nach einer bestimmten Anzahl gesendeter Identifikationssymbole mit dem Senden einer Nutzerdatennutzlast in einem ersten Sendeschlitz zu beginnen, und
Senden einer Nutzerdatennutzlast im ersten Sendeschlitz nach dem Senden der bestimmten Anzahl von Identifikationssymbolen.

4. Verfahren nach Anspruch 2 oder 3, wobei jedes Endgerät ein Symbol für den Rasterbeginn (SOF) am Anfang jedes Sendeschlitzes sendet, wobei das Verfahren ferner das Empfangen einer Anweisung umfasst, die Symbolrate auf der Rückwärtsstrecke anzupassen, um das vom Endgerät abgesendete Symbol für den Rasterbeginn mit Symbolen für den Rasterbeginn, die von anderen Endgeräten im System abgesendet werden, abzugleichen.

5. Verfahren für den Betrieb eines Knotens (20) in einem drahtlosen Mehrfachzugriff-Kommunikationssystem (5), umfassend eine Vielzahl von Endgeräten (40), eine Vorwärtsstrecke (FW) vom Knoten zu den Endgeräten im System und eine Rückwärtsstrecke (RL) von einem Endgerät zum Knoten, wobei die Vielzahl von Endgeräten dasselbe Frequenzband teilt, aber ihre Mittenfrequenz und/oder besetzte Bandbreite mit der Zeit ändert, wobei das Verfahren am Knoten umfasst:
Zuordnen einer Sequenz von Sendeschlitzen zu einem Endgerät im System, wobei jeder Sendeschlitz als ein Zeitschlitz und die Mittenfrequenz definiert ist;
Zuordnen einer Empfangsfunktion der Rückwärtsstrecke für den Empfang des Rückwärtsstreckensignals von jedem Endgerät im Netzwerk; und
Veranlassen eines Empfängers des Endgerätes zum Anpassen der Mittenfrequenz und Symbolrate am Anfang eines neuen Sendeschlitzes im Wesentlichen synchron mit einer Änderung der Mittenfrequenz des empfangenen Signals vom Endgerät durch Bereitstellen von Informationen, die dem Endgerät die während eines nachfolgenden Sendeschlitzes auf der Rückwärtsstrecke zu sendende Symbolrate und Mittenfrequenz anweisen, wobei die Informationen dem Endgerät ermöglichen, die Anzahl der während eines nachfolgenden Sendeschlitzes auf der Rückwärtsstrecke zu sendenden Nichtnullenergie- und Nullenergie-Sendesymbole zu bestimmen, wobei jeder Sendeschlitz als ein Zeitschlitz und die Mittenfrequenz definiert ist;
wobei die Trägerphase des Rückwärtsstreckensignals an den Grenzen der Sendeschlitze kontinuierlich ist; und
wobei die Zeitdauer des Sendeschlitzes des Rückwärtsstreckensignals ein ganzzahliges Vielfaches der Symbolperiode ist.

6. Verfahren nach Anspruch 5, ferner umfassend das Überwachen der Zeitsteuerung des Endgerätes und das Senden einer Anweisung an das Endgerät, die Symbolrate ohne wesentliche Unterbrechung des Rückwärtsstreckensignals zu ändern.

7. Verfahren nach Anspruch 5 oder 6, ferner umfassend das Senden von Informationen, die den nachfolgenden Sendeschlitz identifizieren, an das Endgerät, wobei die Informationen dem Endgerät ermöglichen, eine Anzahl von Sendesymbolen zu bestimmen, die während des nachfolgenden Sendeschlitzes gesendet werden sollen.

8. Verfahren nach Anspruch 7, ferner umfassend das periodische Bestimmen von Sendebedarfen von Endgeräten im System und das Senden der Informationen, die die Sequenz von Sendeschlitzen auf der Basis der bestimmten Sendebedarfe und Qualitätsindikatoren der Rückwärtsstrecke wie etwa Rauschabstand und Sättigung des Endgeräte-Leistungsverstärkers identifizieren.

9. Verfahren nach einem der Ansprüche 5 bis 8, ferner umfassend das Herstellen einer Synchronisation mit einem Endgerät des Systems durch:
Senden einer Anweisung an das Endgerät, das Senden von Identifikationssymbolen auf der Rückwärtsstrecke zu beginnen;
Empfangen der vom Endgerät gesendeten Identifikationssymbole auf der Rückwärtsstrecke und Zählen der Anzahl der empfangenen Identifikationssymbole vom Endgerät;
Bestimmen einer Anfangszeit, zu der das Endgerät Nutzernutzlastdaten in einem ersten Sendeschlitz sendet, basierend auf einer Anzahl gesendeter Identifikationssymbole;
Senden einer Anweisung an das Endgerät, nach der bestimmten Anzahl von Identifikationssymbolen mit dem Senden der Nutzernutzlastdaten im ersten Sendeschlitz zu beginnen.

10. Drahtloses Kommunikationsendgerät (40) für den Einsatz in einem drahtlosen Mehrfachzugriff-Kommunikationssystem (5), umfassend eine Vielzahl von Endgeräten (40) und wobei die Vielzahl von Endgeräten (40) dasselbe Frequenzband teilt, aber ihre Mittenfrequenz und/oder besetzte Bandbreite mit der Zeit ändert, wobei das Endgerät (40) umfasst:
einen Empfänger, der dafür eingerichtet ist, eine Frequenzsynchronisation mit einer stabilen gemeinsamen Referenz im System (5) herzustellen und ein Vorwärtsstreckensignal (FW) zu empfangen, wobei das Vorwärtsstreckensignal Informationen umfasst, die dem Endgerät die während eines nachfolgenden Sendeschlitzes auf der Rückwärtsstrecke zu sendende Symbolrate und Mittenfrequenz anweisen, wobei jeder Sendeschlitz als ein Zeitschlitz und die Mittenfrequenz definiert ist, und
einen Sender, der dafür eingerichtet ist, basierend auf der hergestellten Frequenzsynchronisation und den empfangenen Informationen ein Rückwärtsstreckensignal (RL) über eine Sequenz von Sendeschlitzen mit einer Symbolrate und einer Mittenfrequenz zu senden,
wobei der Sender dafür eingerichtet ist, die Mittenfrequenz und die Symbolrate am Anfang eines neuen Sendeschlitzes anzupassen,
wobei der Sender ferner dafür eingerichtet ist, den Satz von Symbolraten mit einem von einem Satz verschiedener Symbolraten derart zu senden, dass die Zeitdauer des Sendeschlitzes des Rückwärtsstreckensignals ein ganzzahliges Vielfaches einer Symbolperiode ist, wobei der Sendeschlitz eine Anzahl von Sendesymbolen und am Anfang und/oder Ende eine Anzahl von Nullenergie-Signalen umfasst;
wobei die Trägerphase des Rückwärtsstreckensignals an den Grenzen der Sendeschlitze kontinuierlich ist.

11. Drahtlose Kommunikationsvorrichtung für den Einsatz in einem Knoten (20) eines drahtlosen Mehrfachzugriff-Kommunikationssystems (5), umfassend eine Vielzahl von Endgeräten (40) und wobei die Vielzahl von Endgeräten (40) dasselbe Frequenzband teilt, aber ihre Mittenfrequenz und/oder besetzte Bandbreite mit der Zeit ändert, wobei die drahtlose Kommunikationsvorrichtung umfasst:
einen Sender, der dafür eingerichtet ist, ein Vorwärtsstreckensignal (FW) an die Vielzahl von Endgeräten (40) im System zu senden;
einen Empfänger, der dafür eingerichtet ist, ein Rückwärtsstreckensignal (RL) von einem der Endgeräte (40) zu empfangen;
einen Scheduler, der dafür eingerichtet ist:
- eine Sequenz von Sendeschlitzen für die Rückwärtsstrecke jedes Endgerätes zu planen,
- Informationen bereitzustellen, die dem Endgerät die während eines nachfolgenden Sendeschlitzes auf der Rückwärtsstrecke zu sendende Symbolrate und Mittenfrequenz anweisen, wobei die Informationen dem Endgerät ermöglichen, die Anzahl der während eines nachfolgenden Sendeschlitzes auf der Rückwärtsstrecke zu sendenden Nichtnullenergie- und Nullenergie-Sendesymbole zu bestimmen, wobei jeder Sendeschlitz als ein Zeitschlitz und die Mittenfrequenz definiert ist, wobei die Zeitdauer des Sendeschlitzes des Rückwärtsstreckensignals ein ganzzahliges Vielfaches einer Symbolperiode ist und die Trägerphase des Rückwärtsstreckensignals an den Grenzen der Sendeschlitze kontinuierlich ist, und
- den Empfänger zu veranlassen, die Mittenfrequenz und Symbolrate am Anfang eines neuen Sendeschlitzes im Wesentlichen synchron zu einer Änderung der Frequenz des vom Endgerät empfangenen Rückwärtsstreckensignals anzupassen.

12. Software, umfassend Anweisungen, die bei Ausführung durch einen Prozessor den Prozessor veranlassen, das Verfahren nach einem der Ansprüche 1 bis 9 auszuführen.

## Revendications

1. Procédé de fonctionnement d'un terminal (40) dans un système de communication sans fil à accès multiple (5) comprenant plusieurs terminaux (40), une liaison aller (FW) au terminal et une liaison retour (RL) depuis le terminal, où la pluralité de terminaux partage la même bande de fréquence mais change de fréquence centrale et/ou de bande passante occupée avec le temps,
le procédé comprenant :
l'acquisition d'une synchronisation de fréquence avec une référence commune stable dans le système ;
la réception, sur la liaison aller (FW), d'informations instruisant le terminal (40) du taux de symbole et de la fréquence centrale à transmettre pendant un intervalle de transmission suivant dans la liaison retour (RL), chaque intervalle de transmission étant défini comme un intervalle de temps et la fréquence centrale ;
la transmission, à un parmi un jeu de différents taux de symbole, le jeu de taux de symbole par le terminal tel que la durée de l'intervalle de transmission du signal de la liaison retour soit un entier multiple d'une période de symbole, l'intervalle de transmission comprenant un certain nombre de symboles de transmission et, au début et/ou à la fin, un certain nombre de symboles d'énergie nulle ;
la transmission d'un signal de liaison retour depuis le terminal à travers une séquence d'intervalles de transmission à un taux de symbole et une fréquence centrale basés sur la synchronisation de fréquence acquise et les informations reçues, la phase porteuse du signal de liaison retour étant continue aux limites des intervalles de transmission ; et
l'ajustement de la fréquence centrale et du taux de symbole de l'intervalle de transmission au début d'un nouvel intervalle de transmission ;
le maintien de la synchronisation en comptant les symboles transmis.

2. Procédé selon la revendication 1, dans lequel la synchronisation de fréquence est acquise avec la liaison aller (FW).

3. Procédé selon la revendication 2, comprenant en outre l'acquisition de synchronisation avec un hub (20) du système par :
la réception, depuis le hub, d'une instruction pour démarrer la transmission de symboles d'identification sur la liaison retour ;
la transmission, sur la liaison retour, de symboles d'identification et comptage du nombre de symboles d'identification transmis ;
la réception d'une instruction pour débuter la transmission des données utiles de données d'utilisateur dans un premier intervalle de transmission après un nombre spécifié de symboles d'identification transmis ; et
la transmission, dans le premier intervalle de transmission, des données utiles de données d'utilisateur après transmission d'un nombre spécifié de symboles d'identification.

4. Procédé selon la revendication 2 ou 3, dans lequel chaque terminal transmet un symbole de début de trame (SOF) au début de chaque intervalle de transmission, le procédé comprenant en outre la réception d'une instruction d'ajustement du taux de symbole sur la liaison retour afin de synchroniser le symbole de début de trame envoyé par le terminal avec les symboles de début de trame envoyés par d'autres terminaux dans le système.

5. Procédé d'actionnement d'un hub (20) d'un système de communication sans fil à accès multiple (5) comprenant plusieurs terminaux (40), une liaison aller (FW) depuis le hub aux terminaux dans le système et une liaison retour (RL) depuis un terminal au hub, où la pluralité de terminaux partage la même bande de fréquence mais change de fréquence centrale et/ou de bande passante occupée avec le temps,
le procédé comprenant, au niveau du hub :
l'allocation à un terminal dans le système d'une séquence d'intervalles de transmission, chaque intervalle de transmission étant défini comme un intervalle de temps et la fréquence centrale ;
l'allocation à une liaison retour d'une fonction de réception pour la réception du signal de liaison retour depuis chaque terminal dans le réseau ; et
obliger un récepteur du terminal à ajuster la fréquence centrale et le taux de symbole au début d'un nouvel intervalle de transmission substantiellement en synchronie avec un changement de la fréquence centrale du signal reçu depuis le terminal en fournissant des informations instruisant le terminal du taux de symbole et de la fréquence centrale à transmettre pendant un intervalle de transmission suivant dans la liaison retour, les informations permettant au terminal de déterminer le nombre de symboles d'énergie nulle et les symboles de transmission d'énergie nulle à transmettre pendant l'intervalle de transmission suivant dans la liaison retour, chaque intervalle de transmission étant défini comme un intervalle de temps et la fréquence centrale ;
la phase porteuse du signal de liaison retour étant continue aux limites des intervalles de transmission ; et
la durée de l'intervalle de transmission du signal de liaison retour étant un entier multiple de la période de symbole.

6. Procédé selon la revendication 5, comprenant en outre le contrôle du timing du terminal et la transmission d'une instruction au terminal de modifier le taux de symbole sans interruption substantielle du signal de liaison retour.

7. Procédé selon la revendication 5 ou 6, comprenant en outre la transmission d'informations au terminal à identifier un intervalle de transmission suivant, et dans lequel les informations permettent au terminal de déterminer un nombre de symboles de transmission à transmettre pendant l'intervalle de transmission suivant.

8. Procédé selon la revendication 7, comprenant en outre la détermination périodique des besoins de transmission de terminaux dans le système et la transmission des informations identifiant la séquence d'intervalles de transmission en fonction des besoins de transmission déterminés et d'indicateurs de qualité de liaison retour, comme un rapport signal/bruit et une saturation d'amplificateur de puissance du terminal.

9. Procédé selon l'un quelconque des revendications 5 à 8, comprenant en outre l'acquisition d'une synchronisation avec un terminal du système par :
la transmission d'une instruction au terminal de démarrer la transmission de symboles d'identification sur la liaison retour ;
la réception, sur la liaison retour, de symboles d'identification transmis par le terminal et le décompte du nombre de symboles d'identification reçus du terminal ;
la détermination d'un moment de démarrage pour le terminal pour transmettre des données utiles de données d'utilisateur dans un premier intervalle de transmission en fonction d'un nombre de symboles d'identification transmis ;
la transmission d'une instruction au terminal de commencer à transmettre des données utiles de données d'utilisateur dans le premier intervalle de transmission après le nombre déterminé de symboles d'identification.

10. Terminal (40) dans un système de communication sans fil destiné à être utilisé dans un système de communication sans fil à accès multiple (5) comprenant plusieurs terminaux (40) et où la pluralité de terminaux (40) partage la même bande de fréquence mais change de fréquence centrale et/ou de bande passante occupée avec le temps,
le terminal (40) comprenant :
un récepteur conçu pour acquérir une synchronisation de fréquence avec une référence commune stable dans le système (5) et pour recevoir un signal de liaison aller (FW), le signal de liaison aller comprenant des informations instruisant le terminal du taux de symbole et de la fréquence centrale à transmettre pendant un intervalle de transmission suivant dans la liaison retour, chaque intervalle de transmission étant défini comme un intervalle de temps et la fréquence centrale, et
un transmetteur conçu pour transmettre un signal de liaison retour (RL) à travers une séquence d'intervalles de transmission à un taux de symbole et une fréquence centrale basés sur la synchronisation de fréquence acquise et les informations reçues,
le transmetteur étant conçu pour ajuster la fréquence centrale et le taux de symbole au début d'un nouvel intervalle de transmission, et
le transmetteur étant, en outre, conçu pour transmettre à un jeu de différents taux de symbole, du jeu de taux de symbole, tel que la durée de l'intervalle de transmission du signal de la liaison retour soit un entier multiple d'une période de symbole, l'intervalle de transmission comprenant un certain nombre de symboles de transmission et, au début et/ou à la fin, un certain nombre de symboles d'énergie nulle ;
la phase porteuse du signal de liaison retour étant continue aux limites des intervalles de transmission.

11. Appareil de communication sans fil destiné à être utilisé au niveau d'un hub (20) d'un système de communication sans fil à accès multiple (5) comprenant plusieurs terminaux (40), la pluralité de terminaux partageant la même bande de fréquence mais changeant de fréquence centrale et/ou de bande passante occupée avec le temps, l'appareil de communication sans fil comprenant :
un transmetteur conçu pour transmettre une liaison aller (FW) à la pluralité de terminaux (40) dans le système ;
un récepteur conçu pour recevoir un signal de liaison retour (RL) depuis un des terminaux ;
un programmateur conçu pour :
- planifier une séquence d'intervalles de transmission pour la liaison retour de chaque terminal,
- fournir des informations instruisant le terminal du taux de symbole et de la fréquence centrale à transmettre pendant un intervalle de transmission suivant dans la liaison retour, les informations permettant au terminal de déterminer le nombre de symboles d'énergie nulle et les symboles de transmission d'énergie nulle à transmettre pendant l'intervalle de transmission suivant dans la liaison retour, chaque intervalle de transmission étant défini comme un intervalle de temps et la fréquence centrale, la durée de l'intervalle de transmission étant un entier multiple d'une période de symbole et la phase porteuse du signal de liaison retour étant continue aux limites des intervalles de transmission, et
- obliger un récepteur du terminal à ajuster la fréquence centrale et le taux de symbole au début d'un nouvel intervalle de transmission substantiellement en synchronie avec un changement de la fréquence centrale du signal reçu depuis le terminal.

12. Logiciel comprenant des instructions qui, quand elles sont exécutées par un processeur, obligent le processeur à effectuer le procédé selon l'une quelconque des revendications 1 à 9.
